# EUROPEAN PATENT APPLICATION

(11) **EP 2 638 946 A1**
(43) Date of publication of application: **18.09.2013**
(21) Application number: 13159188.5
(22) Date of filing: 14.03.2013
(51) Int. Cl.: B01D 46/00, B01D 46/44, B01D 29/52, B01D 29/60, G01N 7/10, G01N 15/02, G01N 15/06, G01N 1/22

(54) **Sensor unit and method of measuring a flow of fluid**

(30) Priority: 14.03.2012 NL 2008489
(71) Applicant: Dutchap B.V., 7556 BV Hengelo (NL)
(72) Inventor: Kleizen, Hermanus Hendrikus, 3142 CP MAASSLUIS (NL)
(74) Representative: EP&C

(57) **Abstract**

Sensor unit for measuring a flow of fluid containing particles, comprising a flow inlet for allowing the flow of fluid to enter and a flow outlet for allowing the flow of fluid to exit, a flow passage and at least two filter media in the flow passage for filtering particles from the flow of fluid. A first filter medium A is provided for filtering particles of a first threshold particle size da from the flow of fluid. A second filter medium B is provided parallel to the first filter medium for filtering particles of a second threshold particle size db from the flow of fluid. The sensor unit furthermore comprises at least one measuring unit M which is designed to perform a first measurement m1 of a filter resistance W1 of the first filter medium A and to perform a second measurement m2 of a filter resistance W2 of the second filter medium B. By means of the sensor unit, it is possible to measure and monitor properties of the flow of fluid.

## Description

The present invention relates to a sensor unit for measuring a flow of fluid containing particles. The sensor unit comprises a flow inlet for allowing the flow of fluid to enter and a flow outlet for allowing the flow of fluid to exit. A flow passage extends from the flow inlet to the flow outlet. The sensor unit comprises a filter medium which is arranged in the flow passage. The sensor unit comprises a measuring unit which is designed to perform a first measurement of a filter resistance of the filter medium.

Furthermore, the invention relates to a method for measuring a flow of fluid, in which a filter resistance is measured by means of the sensor unit.

A filter medium is designed to collect particles from a passing flow of fluid, in which the collected particles have a particle size which is greater than or equal to a threshold particle size associated with the specific filter medium. If particles in the flow of fluid are of a particle size which is greater than the threshold particle size, the particles will be collected in the filter medium and stay behind. The collected particles clog up the filter medium, as a result of which the filter resistance for passing through the filter medium increases.

It is known to measure the clogging up of a filter medium of a filter device by means of a measuring unit. The measuring unit is for example a pressure sensor or a flow meter. The measuring unit may be connected to a measuring point which is situated upstream or downstream from the filter medium. When the measured filter resistance has passed a predetermined threshold value, a signal can be emitted, after which, for example, a decision may be made to replace the filter medium.

EP1106797A1 discloses a soot sensor for monitoring a soot filter. The soot sensor is arranged in a bypass duct or upstream from the soot filter.

A drawback of the known filter resistance measurement to detect an excessive clogging up of a filter medium of the filter device is the fact that the filter resistance measurement hardly provides any information about properties of the flow of fluid. In addition, it is desirable to be able to carry out a measurement after which preventive action can be taken, so that a flow of fluid can, for example, be temporarily diverted or returned and the filter medium can be saved therefrom.

US4.633.706 discloses a system for measuring amounts of particulates from diluted gas exhausted from a vehicle internal combustion engine, such as a diesel engine. One part of the diluted gas is introduced into a first sampling arrangement in which a first filter is provided for collecting particulates of dry soot and another part of the diluted gas is introduced into a second sampling arrangement in which a second filter is provided for collecting particulates of a soluble organic fraction. The amount of dry soot and soluble organic fraction are calculated in accordance with pressured crops across the filters. The second sampling arrangement includes an additional filter for collecting dry soot which is disposed in an area upstream of the second filter. The additional filter is made from the same material and composition as those of the first filter.

A drawback of the disclosed system is that such a measurement of the amount of particulates in the gas flow is inaccurate. The additional filter in the second sampling arrangement will collect particulates from the gas flow and is disturbing the composition of the gas flow before the gas flow passes through the second filter. Collected organic fractions will stay behind in the additional filter and will not be measured by the second filter. Herewith, the measurement carried out by the disclosed system is inaccurate. In particular, the disclosed system is not suitable to carry out an accurate measurement in a beer-brewing process.

It is an object of the present invention to at least partly eliminate one of the abovementioned drawbacks and/or to provide a usable alternative. In particular, it is an object of the invention to characterize a flow of fluid on the basis of a filter resistance measurement. In particular, it is an object of the invention to provide a sensor unit for a beer-brewing process to obtain an accurate characterisation of a flow of fluid.

This object is achieved by a sensor unit as defined in claim 1.

According to the invention, a sensor unit is provided for measuring a flow of fluid. The flow of fluid comprises particles. The particles have a particle size. The sensor unit comprises a flow inlet for allowing the flow of fluid to enter and a flow outlet for allowing the flow of fluid to exit. The sensor unit has a flow passage which extends from the flow inlet to the flow outlet. In order to pass a sample flow of fluid through a system, the flow passage may be positioned parallel to a main flow of the fluid which is in flow communication with a device, for example a filter device. Furthermore, the sensor unit comprises at least two filter media for filtering particles from the flow of fluid. The filter media are arranged in the flow passage. The filter media comprise a first filter medium A for filtering particles of a first threshold particle size da from the flow of fluid and a second filter medium B for filtering particles of a second threshold particle size db from the flow of fluid. The first filter medium A is arranged in the flow passage and is in flow communication with the flow inlet and the flow outlet. The second filter medium B is arranged in the flow passage and is in flow communication with the flow inlet and the flow outlet. The first filter medium A is arranged parallel to the second filter medium B. The flow of fluid is distributed over the first and second filter medium, in such a way that a first portion of the flow of fluid passes through the first filter medium A and a second portion of the flow of fluid passes in the same composition through the second filter medium B. The first and second portion of the flow of fluid have the same composition when passing through respectively the first and second filter medium. No pre-filtering is applied on the flow of fluid before the flow of fluid passes through the first or second filter medium. Furthermore, the sensor unit comprises at least one measuring unit M which is designed to perform a first measurement m1 of a filter resistance W1 of the first filter medium A and to perform a second measurement m2 of a filter resistance W2 of the second filter medium B.

The sensor unit according to the invention is suitable for measuring a flow of fluid. By means of the sensor unit, it is possible to measure how a first filter resistance of the first filter medium changes compared to a second filter resistance of a second filter medium. The same composition of the flow of fluid flows respectively through the first and second filter which results in an accurate characterisation of the flow of fluid.

Using the sensor unit, it is possible to measure and monitor properties of the flow of fluid. By means of the sensor unit, the presence of particles larger than a certain particle size can be detected. Furthermore, a concentration of particles which are larger than a certain particle size can be determined in the flow of fluid using the sensor unit. The first and second filter medium are each designed to filter particles of a particle size which is greater than a threshold particle size. When a flow of fluid passes through the first and second filter medium, particles of a particle size greater than the threshold particle size will remain behind in the first and second filter medium. As a result thereof, the filter medium will clog up, thus increasing the filter resistance of the filter medium. The increase in the filter resistance is measured by means of the measuring unit. The degree of increase in the filter resistance firstly provides an indication of the presence of particles having a particle size which is greater than the threshold particle size. Secondly, the speed at which the increase in the filter resistance occurs provides an indication of the amount or concentration of particles having a particle size which is greater than the threshold particle size.

Advantageously, the presence of at least two filter media makes it possible to determine the composition of a flow of fluid more accurately. Due to the fact that the filter media have different filtering properties, it is possible, for example, to measure a concentration of particles having a particle size within a certain range when using filter media with a different threshold particle size or a concentration of a certain particle size using filter media having the same threshold particle size but a different filter surface. Thus, the invention advantageously provides a sensor unit by means of which properties of a passing flow of fluid can be measured. Different embodiments of the sensor unit according to the invention are intended for different measurements of a flow of fluid. These different embodiments and their associated advantages will be explained below.

Advantageously, the sensor unit according to the invention can be accommodated in a pipe system, with a flow of fluid passing through the pipe system. In this case, the sensor unit may, for example, be used as a monitoring sensor to detect whether a flow of fluid containing an excessively high concentration of particles of a certain particle size passes through. The monitoring sensor may be positioned upstream and parallel to a main flow of fluid for a filtering installation. The filtering installation may, for example, be protected by a diversion or return pipe in the pipe system in case the monitoring sensor detects a flow of fluid containing an excessively high concentration of a certain particle size. Advantageously, an excessively rapid clogging-up of the filtering installation can thus be prevented.

In an embodiment of the sensor unit according to the invention, the measuring unit is designed to perform a first and second measurement of a varying filter resistance during a time interval. Using the measuring unit, a first measurement is carried out, in which a varying filter resistance of the first filter medium is measured. Using the measuring unit, a second measurement is furthermore carried out, in which a varying filter resistance of the second filter medium is measured. The variation of the filter resistance of the filter medium can be determined as a function of time. The variation of the filter resistance advantageously provides information about the concentration of particles and the associated particle size of the particles in the measured flow of fluid. A relatively rapid increase in the filter resistance indicates the passing through of a flow of fluid containing a high concentration of particles whose particle size is greater than the threshold particle size associated with the filter medium. A relatively rapid increase in the filter resistance of the first filter medium, but a constant filter resistance of the second filter medium indicates the passing through of a flow of fluid containing a high concentration of particles whose particle size is greater than the threshold particle size associated with the first filter medium, but whose particle size is smaller than the threshold particle size associated with the second filter medium. Advantageously therefore, by measuring the varying filter resistance during a time interval, it is possible to determine the composition of a flow of fluid.

In an embodiment of the sensor unit according to the invention, the measuring unit comprises a first measuring unit for measuring a first difference in filter resistance of the first filter medium. The first measuring unit has a first and second measuring point which are positioned upstream and downstream, respectively, with respect to the first filter medium in the flow passage. Relatively large particles are collected by the filter medium. The first measuring point upstream of the filter medium mainly gathers information with respect to the relatively large particles, while the second measuring point downstream of the filter medium is mainly used to measure relatively small particles. As a result thereof, information about both the relatively large and relatively small particles in a flow of fluid can be obtained. Advantageously, more information has thus been obtained about a passing flow of fluid.

In an embodiment of a sensor unit according to the invention, the measuring unit comprises a second measuring unit for measuring a second difference in filter resistance of the second filter medium. Advantageously, an accurate measurement can be carried out to determine the composition of a flow of fluid.

In an embodiment of a sensor unit according to the invention, the measuring unit comprises at least one pressure sensor for measuring a fluid pressure in the flow of fluid. The pressure sensor is positioned in the flow passage, at a position in the flow of fluid upstream and/or downstream of the filter medium. By means of the pressure sensor, the pressure in the flow of fluid can be measured. The pressure in the flow of fluid is indicative of the filter resistance of the filter medium. By means of performing subsequent measurements using the pressure sensor, an increase in pressure can be detected, indicating a clogging-up of the filter medium. If the threshold particle size value of the filter medium is known, it is then possible to determine the composition of the flow of fluid. Using measurement data from the pressure sensor, it is possible to determine a flow rate of a flow of fluid. When calculating the flow rate of the flow of fluid, the geometry of the flow passage and/or a measured temperature of the flow of fluid can be taken into account.

In an alternative embodiment of the sensor unit according to the invention, the measuring unit comprises a flow rate sensor for measuring a flow rate of a flow of fluid. The flow rate sensor is positioned in the flow passage, at a position in the flow of fluid upstream or downstream of the filter medium. Using the flow rate sensor, a flow rate of the flow of fluid can be measured. The flow rate of a flow of fluid through the flow passage is indicative of the filter resistance of the filter medium. By using the flow rate sensor and carrying out subsequent measurements, it is possible to determine a decreasing flow rate, indicating a clogging-up of the filter medium. If the threshold particle size value of the filter medium is known, it is then possible to determine the composition of the flow of fluid.

In an embodiment of the sensor unit according to the invention, at least one measuring point is provided downstream of the at least two filter media for performing a measurement. In an embodiment of the sensor unit according to the invention, a first measuring point is provided downstream of the first filter medium for performing the first measurement. In an embodiment of the sensor unit according to the invention, a second measuring point is provided downstream of the second filter medium for performing the second measurement. Advantageously, the measuring points are positioned downstream of the filter media in order to reduce pollution of the measuring points.

In an embodiment of the sensor unit according to the invention, the first filter medium A has a filter surface which is smaller than that of the second filter medium B. The filter surface of a filter medium is defined by a front surface of a filter medium. The filter medium A, for example, has a filter surface of 1 cm², while the filter medium B has a filter surface of 2 cm². As a result thereof, the filter media have different filtering properties. Due to the filter surface of filter medium B being larger than the filter surface of filter medium A, the filter resistance of the filter medium A will increase more rapidly when the filter media clog up. The degree to which the filter resistance of the first and second filter medium increases is then an indication of the composition of the passing flow of fluid.

In a further embodiment of the sensor unit according to the invention, the first and second filter medium are designed to filter particles of the same particle size d. The filter media may have an identical filter structure, but a different filter surface in the sensor unit. As a result thereof, the filter media will filter the passing flow of fluid for particles of the same particle size, but the filter resistance of the different filter media will increase in a different way. The difference in increase in the filter resistance is then indicative of the concentration of particles of a certain particle size in the passing flow of fluid.

In an embodiment of the sensor unit according to the invention, the first filter medium is a coarse filter and the second filter medium is a fine filter. The coarse filter is designed for filtering coarse particles of a threshold particle size da from the flow of fluid. The fine filter is designed for filtering fine particles of a threshold particle size db from the flow of fluid. Due to the different filter structure, the filter media have different filtering properties. The filter media are designed to collect particles of different particle sizes. Advantageously, it is possible to determine the composition of a passing flow of fluid using the sensor unit according to the invention by measuring filter resistances. By using two filter media with different threshold particle sizes, it is possible to carry out a measurement to determine concentrations of particles within ranges of different particle sizes.

In an embodiment of the sensor unit according to the invention, the sensor unit comprises at least one filter medium containing a filter powder. The filter powder forms the filter structure of the filter medium. The filter powder is designed to collect particles. In an embodiment, the filter powder may be contained in a filter holder, a so-called filter pad. In a filter pad, the powder is contained in a holder which is made of porous material and allows liquid through, just like a coffee pad. Advantageously, a filter pad is easily exchangeable. In an embodiment, the filter powder may rest on a filter carrier, for example a perforated plate. Advantageously, the sensor unit can easily be cleaned by passing a flow of fluid, in particular a cleaning fluid, in the opposite direction through the flow passage, from the flow outlet to the flow inlet of the sensor unit. After the sensor unit has been cleaned, the sensor unit can advantageously be used again.

In a further embodiment of the sensor unit according to the invention, the coarse filter comprises a coarse filter powder and the fine filter comprises a fine filter powder. Advantageously, the sensor unit can easily be cleaned and the sensor unit is designed to measure a flow of fluid containing particles of particle sizes which are within different ranges of particle sizes.

Further embodiments are defined in the further subclaims.

Furthermore, the invention relates to a system. The system according to the invention comprises a sensor unit according to the invention. In an embodiment of the system, the system comprises a data carrier which contains a computer program with instructions which can be carried out on a computer to perform a control operation on the basis of at least one measurement signal sent by the measuring unit of the sensor unit. The data carrier is, for example, a CD ROM or a USB stick. The computer program may be downloaded to a control unit to control a process, with the sensor unit being provided in the process.

In an embodiment of the system according to the invention, the system furthermore comprises a control unit for actuating at least one flow valve in a pipe system. On the basis of an input signal coming from the sensor unit, the control unit sends an output signal to the flow valve. The control unit of the sensor unit may be incorporated in the sensor unit.

In an embodiment of the system according to the invention, the system furthermore comprises a flow valve which is in flow communication with the flow outlet of the sensor unit for controlling the flow of fluid from the sensor unit. The flow valve is designed to control a flow of fluid through at least two pipes by means of a valve. The valve can close off at least one pipe in such a manner that the flow of fluid is directed towards a pipe which has remained open. In particular, the flow valve is designed to direct the flow of fluid through a first pipe or through a second pipe, in which case the flow valve comprises a valve for closing off the second or first pipe, respectively. The flow valve of the sensor unit may be incorporated in the sensor unit. The sensor unit may comprise a housing, with the flow valve being positioned inside the housing. Advantageously, the sensor unit together with the flow valve may be fitted in a pipe system as a unit.

In an embodiment of the system according to the invention, the system comprises a filtering installation. The flow outlet of the sensor unit is in flow communication with the filtering installation, with the filtering installation being designed to filter the flow of fluid. The sensor unit is arranged upstream of the filtering installation. The sensor unit may be arranged upstream of the filtering installation, in or parallel to the main flow of the fluid. In a parallel configuration, the flow passage of the sensor unit forms a duct for a sample flow. The sample flow is positioned parallel to the main flow of fluid. By means of the sensor unit, it is possible to measure a flow of fluid before it is supplied to the filtering installation. If the flow of fluid does not satisfy a predetermined composition, this can be measured and detected by the sensor unit and the filtering process can be controlled on the basis of a signal sent by the sensor unit. The flow of fluid may, for example, be temporarily discharged, in such a way that the flow of fluid does not flow through the filtering installation. This makes it possible to prevent a rapid clogging-up and disposal of the filtering installation.

In an embodiment of the system according to the invention, the system comprises a filtering installation, in which a sensor unit is arranged downstream of the filtering installation.

In an embodiment of the system according to the invention, the system comprises a filtering installation, in which a sensor unit is arranged parallel to the filtering installation. The sensor unit may be arranged parallel to a main flow of the fluid through the filtering installation, in which case the flow passage of the sensor unit forms a duct for a sample flow. The sample flow through the sensor unit is thus arranged parallel to the main flow of fluid.

In an embodiment of the system according to the invention, the system comprises a filtering installation, with the filtering installation being formed by the sensor unit. The sensor unit may be designed to operate as a stand-alone. In this way, the sensor unit in the system acts as a main filter.

In an embodiment of the system according to the invention, the system furthermore comprises a fluid sensor for measuring a fluid property. A fluid property may be, for example, particle size, particle concentration, fluid temperature, etc. The fluid sensor is, for example, a temperature sensor for measuring a temperature of a fluid. The temperature sensor may be incorporated in the sensor unit. The fluid sensor is, for example, a turbidity meter. The turbidity meter can measure the degree of turbidity of a passing flow of fluid, for example by an optical measurement, in particular by a colour measurement. The turbidity meter can, for example, measure on the basis of the scattering of light. The sensor unit may be arranged parallel to the fluid sensor. The sensor unit may comprise the fluid sensor, in such a way that the fluid sensor is incorporated in the sensor unit and forms a separate unit. Advantageously, it is possible to measure further properties of the passing flow of fluid by using the sensor unit in combination with the fluid sensor. This offers advantages in particular in a beer-brewing process.

Further embodiments are defined in the other subclaims.

Furthermore, the invention relates to a method for measuring a flow of fluid. The method comprises a step of providing a sensor unit according to the invention. In a step of the method, the flow of fluid is fed to a flow inlet of the sensor unit. In a subsequent step, the flow of fluid is distributed over the at least two filter media of the sensor unit. In particular, the flow of fluid is distributed in a first portion of fluid flow over the first filter medium and in a second portion of fluid flow over the second filter medium. The composition of the first and second fluid flow is the same when the first and second portion of fluid flow pass through respectively the first and second filter medium. In a subsequent step of the method according to the invention, a first measurement of a filter resistance of the first filter medium is carried out. In a step of the method according to the invention, a second measurement of a filter resistance of the second filter medium is carried out. Advantageously, by performing at least two measurements of filter resistances of at least two filter media, data can be obtained about the composition of the flow of fluid.

In an embodiment of the method according to the invention, the filter resistance of the at least two filter media is measured during a certain time interval. It is possible to measure a change in the filter resistance of the time interval. The variation of the filter resistance can be measured as a function of time. Advantageously, the measurement data provide information about the composition of the flow of fluid.

In an embodiment of the method according to the invention, the method comprises a step of classifying the flow of fluid on the basis of results of a first and second measurement. A flow of fluid may, for example, be classified on the basis of a particle size or on the basis of a concentration of particles of a certain particle size. When classification is based on the particle size, the filter media in the sensor unit may define a threshold value for the particle size.

A classification of the flow of fluid will be explained in more detail with reference to an exemplary embodiment. The first filter medium has, for example, a threshold value, a threshold particle size, da. In this case, the first filter medium is a coarse filter for filtering coarse particles. The second filter medium has, for example, a threshold value, threshold particle size, db. The threshold particle size db is smaller than the threshold particle size da. The second filter medium is thus a fine filter for filtering fine particles.

In a first situation, the flow of fluid can be classified as belonging to a category X if the particles in the flow of fluid have a particle size d which is smaller than the threshold particle size db of the fine filter. As a result of the small particle size associated with category X, none of the filter media will clog up. The filter resistance of the first and second filter medium will remain constant. After a measurement by means of the sensor unit, the flow of fluid may be classified as a flow of fluid belonging to category X.

In a second situation, the flow of fluid may be classified as belonging to a category Y if the particles in the flow of fluid have a particle size d which is greater than the threshold particle size db, but smaller than the threshold particle size da. As a result thereof, the second filter medium, the fine filter, will clog up and the filter resistance of the second filter medium will increase, but the coarse filter will remain open and the filter resistance of the coarse filter will remain constant.

In a third situation, the flow of fluid may be classified as belonging to a category Z if the particles in the flow of fluid have a particle size d which is greater than the threshold particle size da, db of both filter media. Both filter media will clog up when the flow of fluid passes through, as a result of which the filter resistance of both the first and the second filter medium increases.

From the variation in the filter resistance of the at least two filter media of the sensor unit according to the invention as a function of time, information can be obtained about the number of and the particle size of particles in the flow of fluid. The three situations of the exemplary embodiment show that the flow of fluid can easily be classified using the method according to the invention by means of the sensor unit according to the invention. As a result, information is advantageously obtained with regard to a passing flow of fluid using the sensor unit according to the invention.

Further embodiments are defined in the other subclaims.

When the sensor unit according to the invention is in use, a flow of fluid may be very varied, depending on the application. With regard to the sensor unit according to the invention, the flow of fluid may be given a wide interpretation. A flow of fluid may, for example, be a flow of potatoes, in which the potatoes are of different sizes. A flow of fluid may also a flow of liquid, in which particles in the flow of liquid have a different particle size or different molecule size. The flow of fluid may, for example, be a gas, in which particles and droplets in the gas have to be characterized. The flow of fluid may relate to a liquid, in which particles, droplets and/or bubbles in the liquid have to be characterized. In an alternative application of the sensor unit according to the invention, biological entities in a flow of fluid, such as bacteria, archaea and viruses, may be characterized.

A filtering installation, also referred to generally as a filter, may be defined as a device which can be fitted in flows of fluids in order to collect particles. A filter medium may be defined as the device which collects particles. A filter medium which is present affects an operating filter mechanism. The filter mechanism is dependent on the filter medium which is present.

The invention will be explained in more detail with reference to the attached drawings. The drawings show a practical embodiment of the invention and should not be regarded as being limiting. Specific detailed features can also be seen as being characteristic of the invention in a general sense, separately from the combination shown in the exemplary embodiment. In the drawings:
Figs. 1a-c diagrammatically show a view of a sensor unit according to the invention;
Fig. 2 diagrammatically shows a view of an alternative embodiment of a sensor unit according to the invention;
Fig. 3 diagrammatically shows a view of an alternative embodiment of a sensor unit according to the invention; and
Fig. 4 diagrammatically shows a view of an embodiment of a system comprising a sensor unit according to the invention.
In the figures, identical or similar parts are denoted by identical reference numerals.

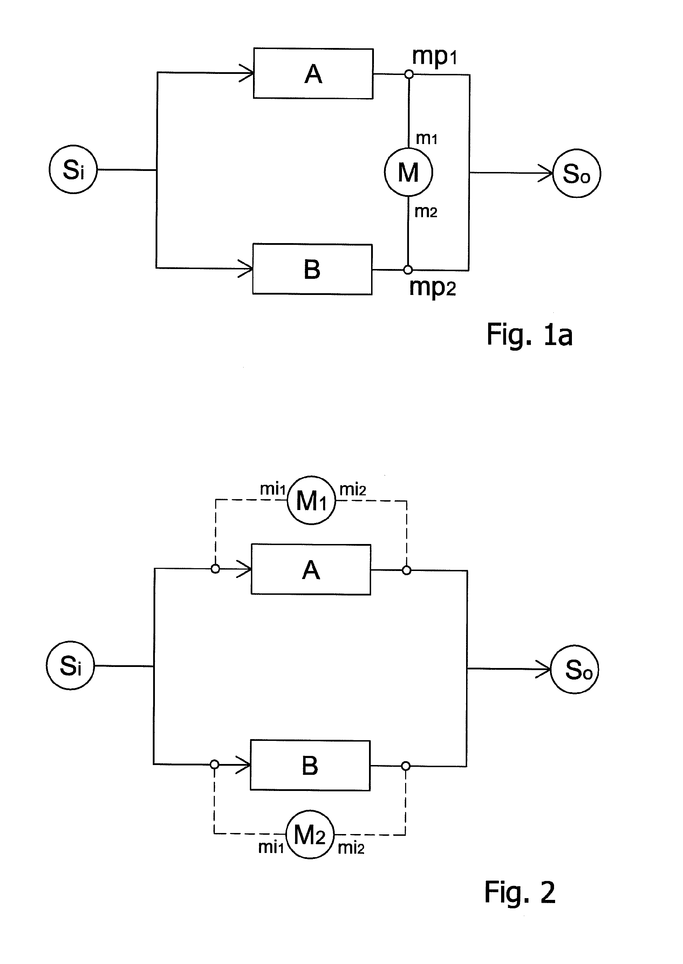

Fig. 1a diagrammatically shows a view of an embodiment of a sensor unit according to the invention. The sensor unit has a flow inlet Si for allowing a flow of fluid to enter. The flow inlet Si is in flow communication with a first filter medium, a coarse filter A, and a second filter medium, a fine filter B. The coarse filter A is designed to filter coarse particles from the flow of fluid. The coarse particles have a coarse particle size da. The fine filter B is designed to filter fine particles from the flow of fluid. The fine particles have a fine particle size db. The coarse filter A is designed to filter larger particles from the flow of fluid than the fine filter B. The coarse filter A is arranged in parallel to the fine filter B. A flow of fluid which is supplied to the sensor unit via the flow inlet Si is distributed by a flow distributor and supplied to the coarse filter A and the fine filter B. A portion of the flow of fluid is supplied to the coarse filter A and another part of the flow of fluid is supplied to the fine filter B. The distributed flow of fluid then passes through the coarse filter A and the fine filter B. The flow of fluid is directly supplied to the coarse filter A and the fine filter B. Directly means that no pre-filtering takes place on the flow of fluid before passing the flow of fluid through the coarse or fine filter. No other filter medium is arranged upstream coarse filter A or fine filter B. The flow of fluid passes in the same composition through the coarse and fine filter A and B. After the flow of fluid has passed through the coarse filter A and the fine filter B, the flow of fluid is combined by means of a flow collector. Thereafter, the flow of fluid can leave the sensor unit via the flow outlet So. The sensor unit comprises a flow passage which extends from the flow inlet to the flow outlet. The flow passage has an inlet at the flow inlet and an outlet at the flow outlet. The flow passage extends from the flow inlet, via the flow distributor, to the first and second filter medium and from the first and second filter medium, via the flow collector, to the flow outlet.

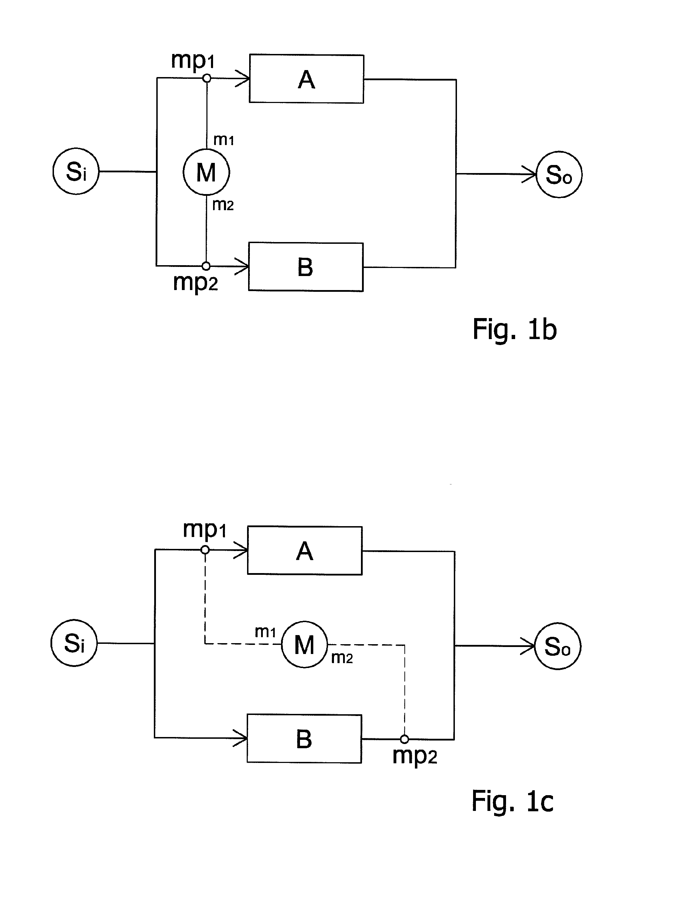

The sensor unit furthermore comprises a measuring unit M for measuring a filter resistance in the sensor unit. The measuring unit M is illustrated in Figs. 1a, 1b and 1c. The measuring unit M has at least one measuring input mi1 for measuring a filter resistance during a first measurement m1 at the location of a measuring point mp1 in the flow of fluid. The filter resistance may be measured upstream, as is illustrated in Fig. 1b, but preferably downstream of the filter medium, as is illustrated in Fig. 1a. Fig. 1c diagrammatically shows an alternative embodiment, in which the measuring unit M has a first measuring point mp1 upstream of the first filter medium A and a second measuring point mp2 downstream of the second filter medium B. The measuring unit M is for, example, a pressure sensor or a flow rate sensor. The pressure or the flow rate of a flow of fluid is indicative of a filter resistance of a filter medium.

Using the measuring unit M, it is possible to measure a change in the filter resistance of a filter medium. The change in the filter resistance can be measured over a time interval. The change of the filter resistance can be measured as a function of time. The change in the filter resistance of a filter medium is indicative of a clogging-up of the filter medium. When a filter medium captures particles from a flow of fluid, the collected particles remain behind in the filter medium, as a result of which the filter medium clogs up. A filter medium is designed to collect particles having a certain threshold particle size. When a filter medium clogs up, this means that the flow of fluid comprises particles which are larger than the specified threshold particle size associated with the filter medium. A change in the filter resistance of a filter medium is thus an indication of the presence of a certain particle size of particles in the flow of fluid. If the filter resistance of a filter medium, for example, changes rapidly, this is an indication of a filter medium which is rapidly clogging up, which is an indication of a large number of particles of a certain particle size in the flow of fluid.

In Fig. 2, the measuring unit M comprises a first and second filter resistance meter M1, M2 having a first measuring input mi1 and a second measuring input mi2. The first measuring input mi1 of the filter resistance meter M1 is connected to the flow inlet Si for measuring a first flow resistance W1 on a flow inlet side of the sensor unit and the second measuring input mi2 of the filter resistance meter M1, M2 is connected to the flow outlet So for measuring a second flow resistance W2 on a flow outlet side of the sensor unit. The flow resistance can be determined, for example, by a pressure or flow rate measurement in the flow of fluid. The first measuring input mi1 of the filter resistance meter M1 is connected to a measuring point in the flow of fluid, upstream of the first filter medium A. The second measuring input mi2 is connected to a measuring point downstream of the first filter medium A. By means of the filter resistance meters M1 and M2, a difference in flow resistances between the first flow resistance W1 and the second flow resistance W2 can be determined. A change in the difference in flow resistance, W1 minus W2, indicates a clogging up of a filter medium.

Fig. 2 shows two filter resistance meters M1, M2. The first filter resistance meter M1 is provided for measuring a difference in flow resistance of the coarse filter A. A flow resistance of a filter medium may be defined as a filter resistance of the filter medium. A second filter resistance meter M2 is provided for measuring a difference in flow resistance of the fine filter B. In a method for detecting a particle size in a flow of fluid, the changes in the difference in flow resistances of the coarse filter A and the fine filter B are indicative of the presence of a specific particle size in the flow of fluid. The coarse filter A filters particles of a particle size da from the flow of fluid. The fine filter B filters particles of a particle size db from the flow of fluid. The flow of fluid can then be classified into different categories, after measurement by the sensor unit.

A first flow of fluid without any, or hardly any, particles of a particle size greater than da, db can be classified as belonging to a first category X. Both the coarse filter A and the fine filter B will allow the flow of fluid to pass through, with neither the coarse filter A nor the fine filter B clogging up substantially. The measured difference in flow resistance of the coarse filter A and the fine filter B will hardly change, if at all, over a certain time interval. The sensor unit will detect the flow of fluid which can be classified as a flow of fluid in the category X.

A second flow of fluid containing a substantial number of particles of a particle size greater than the particle size db, but without any or hardly any particles of a particle size greater than the particle size da can be classified as belonging to a second category Y. When the flow of fluid passes through the sensor unit, the fine filter B will clog up and thus the filter resistance of the fine filter B will increase, whereas the coarse filter A does not, or hardly, clog up and thus the filter resistance of the coarse filter A remains substantially constant. After a measurement by means of the sensor unit according to the invention, the flow of fluid can be classified as belonging to the category Y.

A third flow of fluid containing a substantial number of particles of a particle size greater than the particle sizes da and db can be classified as belonging to a third category Z. Both the coarse filter A and the fine filter B will have clogged up after the flow of fluid has passed through, as a result of which the filter resistance of the coarse filter and the fine filter increases. The increase in the filter resistance of both the coarse filter and the fine filter is measured by means of the sensor unit, after which the flow of fluid can be classified as belonging to the category Z.

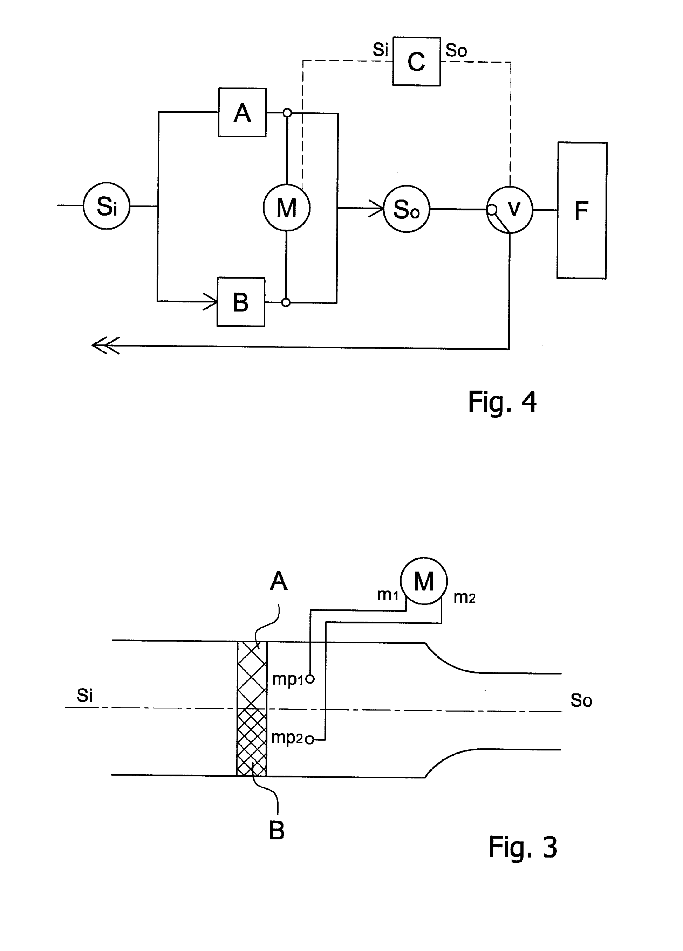

Fig. 3 diagrammatically shows an alternative embodiment of the sensor unit according to the invention. The sensor unit has a flow inlet Si and a flow outlet So. The flow inlet Si has a single flow inlet opening. The flow outlet So has a single flow outlet opening. A flow passage extends from the flow inlet Si to the flow outlet So. In Fig. 3, the sensor unit does not have a flow distributor or a flow collector. In Fig. 3, the flow passage is formed by a single pipe part. The pipe part has a single passage for the passage of the flow of fluid. The pipe part is provided with a first filter medium A and a second filter medium B. The combined front surfaces of the first and second filter media are equal to a cross-sectional area of the pipe part, in such a way that a flow of fluid is forced to pass through the filter media. The first and second filter medium are subjected to the same composition of the flow of fluid. The filter medium A is provided in an upper part of the passage of the pipe part. The filter medium B is provided in a lower part of the passage of the pipe part. Alternatively, the first filter medium A may be provided in a central part of the passage of the pipe part and the filter medium B in a circumferential part of the passage of the pipe part. The filter media A and B may be formed as a single part.

In addition, the sensor unit comprises a measuring unit M. The measuring unit M has a first measuring input mi1 for a first measurement m1 which is connected to a first measuring point mp1 which is positioned downstream of the first filter medium A, and a second measuring input mi2 for a second measurement m2 which is connected to a second measuring point mp2 which is positioned downstream of the second filter medium B. The first measuring point mp1 is associated with the first filter medium A and the second measuring point mp2 is associated with the second filter medium B. The first filter medium A has at least a different filter property compared to the second filter medium B.

Fig. 4 diagrammatically shows a flow diagram of a system comprising a sensor unit and a filtering installation F. The sensor unit is arranged upstream of the filtering installation F. The sensor unit is in flow communication with the filtering installation F by means of a flow valve v. The flow valve v is arranged between the sensor unit and the filtering installation F. The flow valve v has an input opening which is in flow communication with the sensor unit and at least two output openings. A first outlet opening is in flow communication with the filtering installation F. A second outlet opening is in flow communication with a pipe from a pipe network and may be designed as a return pipe or a bypass pipe, etc. The flow valve can switch the flow of fluid from the input opening to the first or second output opening.

The flow valve can be controlled by means of a control system C. The control system is designed to receive an input signal si from the sensor unit. The control system is designed to send an output signal to the flow valve on the basis of a received input signal si from the sensor unit. This makes it possible for the flow valve v to switch from the first output opening to the second output opening and vice versa.

Many variants are possible in addition to the embodiments shown in the figures. A flow inlet and/or flow outlet of a sensor unit may be formed by a single pipe with a single opening, but the latter may also comprise several flow inlet openings or flow outlet openings.

In a variant of the illustrated embodiment, the flow valve may be incorporated in the sensor unit. In a variant, the sensor unit may comprise at least three filter media, with the sensor unit being designed to perform at least one measurement of a filter resistance per filter medium.

Thus, the invention provides a sensor unit, system and method for measuring properties of a passing flow of fluid. By means of the sensor unit, it is possible to measure how a first filter resistance of a first filter medium changes compared to a second filter resistance of a second filter medium. By means of the sensor unit, it is possible to detect the presence of particles larger than a certain particle size. Furthermore, it is possible to determine a concentration of particles of a certain particle size in the flow of fluid by means of the sensor unit. A system which is provided with a sensor unit according to the invention can be controlled in such a manner that the system is less susceptible to failures or requires less maintenance.

Due to the fact that the invention is disclosed by means of specific embodiments, a person skilled in the art may, after reading the description, propose replacements or changes which may be possible from a technical point of view, and which, from a legal point of view, do not fall outside the scope of protection of the invention as defined in the claims. Modifications of the embodiments may be made in a specific situation without deviating from the inventive idea and without departing from the scope of protection. The disclosed embodiments are by no means limiting to the scope of protection of the invention. The scope of protection of the invention comprises all conceivable embodiments which fall within the scope of the attached claims.

Further embodiments are defined by the following clauses:
1. Sensor unit for measuring a flow of fluid containing particles, comprising:
   - a flow inlet for allowing the flow of fluid to enter;
   - a flow outlet for allowing the flow of fluid to exit;
   - a flow passage which extends from the flow inlet to the flow outlet;
   - at least two filter media for filtering particles from the flow of fluid, in which the filter media are arranged in the flow passage, comprising
      a first filter medium A for filtering particles of a first threshold particle size da from the flow of fluid;
      a second filter medium B for filtering particles of a second threshold particle size db from the flow of fluid;
      in which the first filter medium A is arranged parallel to the second filter medium B to let a first portion of the flow of fluid pass through the first filter medium A and to let a second portion of the flow of fluid in the same composition as the first portion of the flow of fluid pass through the second filter medium B; and
   - at least one measuring unit M which is designed to perform a first measurement m1 of a filter resistance W1 of the first filter medium A and to perform a second measurement m2 of a filter resistance W2 of the second filter medium B.
2. Sensor unit according to clause 1, in which the measuring unit M is designed to perform a first and second measurement of a varying filter resistance during a time interval.
3. Sensor unit according to clause 1 or 2, in which the measuring unit comprises a first measuring unit M1 for measuring a first difference in filter resistance W1 of the first filter medium A.
4. Sensor unit according to one of clauses 1-3, in which the measuring unit comprises a second measuring unit M2 for measuring a second difference in filter resistance W2 of the second filter medium B.
5. Sensor unit according to one of preceding clauses, in which the measuring unit M comprises a pressure sensor for measuring a fluid pressure in the flow of fluid.
6. Sensor unit according to one of preceding clauses, in which the measuring unit M comprises a flow rate sensor for measuring a flow rate of a flow of fluid.
7. Sensor unit according to one of preceding clauses, in which at least one measuring point mp1, mp2 is provided downstream of the at least two filter media A,B for performing a measurement m1, m2.
8. Sensor unit according to one of preceding clauses, in which the first filter medium A has a filter surface which is smaller than the filter surface of the second filter medium B.
9. Sensor unit according to one of preceding clauses, in which the first and second filter medium are designed to filter particles of the same particle size d.
10. Sensor unit according to one of clauses 1-8, in which the first filter medium is a coarse filter A for filtering coarse particles of a threshold particle size da from the flow of fluid and in which the second filter medium is a fine filter B for filtering fine particles of a threshold particle size db from the flow of fluid.
11. Sensor unit according to one of the preceding clauses, in which the sensor unit comprises at least one filter medium containing a filter powder.
12. System comprising at least one sensor unit according to one of preceding clauses and a data carrier which contains a computer program with instructions which can be carried out on a computer to perform a control operation on the basis of at least one measurement signal sent by the measuring unit.
13. System according to clause 12, in which the system furthermore comprises a flow valve which is in flow communication with the flow outlet of the sensor unit for controlling the flow of fluid from the sensor unit.
14. System according to clause 12 or 13, furthermore comprising a filtering installation for filtering the flow of fluid, in which the flow passage of the sensor unit is in flow communication with the filtering installation.
15. System according to one of clauses 12-14, comprising a fluid sensor for measuring a fluid property, in which the fluid sensor is incorporated in the sensor unit.
16. Method for measuring a flow of fluid, comprising the following steps:
   - providing a sensor unit according to one of preceding clauses;
   - allowing the flow of fluid to enter a flow inlet of a sensor unit;
   - distributing the flow of fluid over a first filter medium A and a second filter medium B of the sensor unit;
   - performing a first measurement m1 of a filter resistance W1 of the first filter medium A; and
   - performing a second measurement m2 of a filter resistance W2 of the second filter medium B.
17. Method according to clause 16, furthermore comprising the step of classifying the flow of fluid on the basis of the results of the first and second measurement.
18. Method according to clause 17, in which the method comprises the step of classifying a flow of fluid as belonging to a predetermined category on the basis of the particle size of particles in the flow of fluid, in which the filter media determine a threshold value of the particle size.
19. Data carrier, comprising a computer program containing instructions which, when carried out on a computer, cause the computer to perform the steps of the method according to one of the clauses 16-18.

## Claims

1. Sensor unit for measuring a flow of fluid containing particles, comprising:
- a flow inlet for allowing the flow of fluid to enter;
- a flow outlet for allowing the flow of fluid to exit;
- a flow passage which extends from the flow inlet to the flow outlet;
- at least two filter media for filtering particles from the flow of fluid, in which the filter media are arranged in the flow passage, comprising
a first filter medium A for filtering particles of a first threshold particle size da from the flow of fluid;
a second filter medium B for filtering particles of a second threshold particle size db from the flow of fluid;
in which the first filter medium A is arranged parallel to the second filter medium B to let a first portion of the flow of fluid pass through the first filter medium A and to let a second portion of the flow of fluid in the same composition as the first portion of the flow of fluid pass through the second filter medium B; and
- at least one measuring unit M which is designed to perform a first measurement m1 of a filter resistance W1 of the first filter medium A and to perform a second measurement m2 of a filter resistance W2 of the second filter medium B.

2. Sensor unit according to claim 1, in which the first filter medium is a coarse filter A for filtering coarse particles of a threshold particle size da from the flow of fluid and in which the second filter medium is a fine filter B for filtering fine particles of a threshold particle size db from the flow of fluid.

3. Sensor unit according to claim 1 or 2, in which the first filter medium A has a filter surface which is smaller than the filter surface of the second filter medium B.

4. Sensor unit according to one of claims 1-3, in which the measuring unit M is arranged to perform a first and second measurement of a varying filter resistance during a time interval.

5. Sensor unit according to one of preceding claims, in which the measuring unit comprises a first measuring unit M1 for measuring a first difference in filter resistance W1 of the first filter medium A and in which the measuring unit comprises a second measuring unit M2 for measuring a second difference in filter resistance W2 of the second filter medium B.

6. Sensor unit according to one of preceding claims, in which the measuring unit M comprises a flow rate sensor for measuring a flow rate of a flow of fluid or a pressure sensor for measuring a fluid pressure in the flow of fluid.

7. Sensor unit according to one of preceding claims, in which at least one measuring point mp1, mp2 is provided downstream of the at least two filter media A,B for performing a measurement m1, m2.

8. Sensor unit according to one of the preceding claims, in which the sensor unit comprises at least one filter medium containing a filter powder.

9. System comprising at least one sensor unit according to one of preceding claims and a data carrier which contains a computer program with instructions which can be carried out on a computer to perform a control operation on the basis of at least one measurement signal sent by the measuring unit.

10. System according to claim 9, in which the system furthermore comprises a flow valve which is in flow communication with the flow outlet of the sensor unit for controlling the flow of fluid from the sensor unit.

11. System according to claim 9 or 10, furthermore comprising a filtering installation for filtering the flow of fluid, in which the flow passage of the sensor unit is in flow communication with the filtering installation.

12. System according to one of claims 9-11, comprising a fluid sensor for measuring a fluid property, in which the fluid sensor is incorporated in the sensor unit.

13. Method for measuring a flow of fluid, comprising the following steps:
- providing a sensor unit according to one of preceding claims;
- allowing the flow of fluid to enter a flow inlet of a sensor unit;
- distributing the flow of fluid into portions over a first filter medium A and a second filter medium B of the sensor unit, such that the portions have the same composition when passing through respectively the first and second filter medium A, B;
- performing a first measurement m1 of a filter resistance W1 of the first filter medium A; and
- performing a second measurement m2 of a filter resistance W2 of the second filter medium B.

14. Method according to claim 16, furthermore comprising the step of classifying the flow of fluid on the basis of the results of the first and second measurement, in which the method comprises the step of classifying a flow of fluid as belonging to a predetermined category on the basis of the particle size of particles in the flow of fluid, in which the filter media determine a threshold value of the particle size.

15. Data carrier, comprising a computer program containing instructions which, when carried out on a computer, cause the computer to perform the steps of the method according to one of the claims 13-14.
